**Europäisches Patentamt**

**European Patent Office**

**Office européen des brevets**

(11) Publication number: **0 036 055**
A2

# (12) EUROPEAN PATENT APPLICATION

(21) Application number: **80304602.8**

(22) Date of filing: **18.12.80**

(51) Int. Cl.³: **A 01 N 37/12**
**C 02 F 1/50, D 21 C 3/00**

(30) Priority: **31.01.80 GB 8003232**

(43) Date of publication of application:
**23.09.81 Bulletin 81/38**

(84) Designated Contracting States:
**BE CH DE FR GB IT LI NL SE**

(71) Applicant: **IMPERIAL CHEMICAL INDUSTRIES LIMITED**
**Imperial Chemical House Millbank**
**London SW1P 3JF(GB)**

(72) Inventor: **Buckley, Alan John**
**14 Brookway Grasscroft**
**Oldham OL4 4EU(GB)**

(72) Inventor: **Singer, Michael**
**7 Norwood Prestwich**
**Manchester M25 8WS(GB)**

(74) Representative: **Pugsley, Roger Graham et al,**
**IMPERIAL CHEMICAL INDUSTRIES LIMITED Legal**
**Department: Patents Thames House North Millbank**
**London SW1P 4QG(GB)**

(54) Method for the protection of aqueous media against attack by micro-organisms.

(57) A method for the protection of an aqueous medium against attack by micro-organisms by the addition of 1,3-diacetoxy-2-bromo-2-nitropropane.

EP 0 036 055 A2

This invention relates to a method for the protection of aqueous media against attack by micro-organisms.

It is known, from the Journal of Medicinal Chemistry (1974) 17 p.977 et seq. that 2-bromo-2-nitro-propan-1,3-diol (BNPD) will inhibit the growth of Pseudomonas aeroginosa in an aqueous medium and in fact this substance is marketed under the trade mark "Bronopol" for protection of cosmetic and toilet preparations against microbial attack.   The same document also reports on the anti-microbial activity of some derivatives of this compound, including a series of esters with the lower fatty acids which, apart from the dipropionyl ester, are reported to have very low activity compared with the diol.  It is also reported in Japanese Patent Publication No.46-12938 that the compound 1,3-diacetoxy-2-bromo-2-nitropropane can be used to prevent the discolouration of, and the formation of malodours in, starch.   Certain other esters of BDNP are disclosed, in UK Patent Publication 2007215A, to have antimicrobial activity.

It has now been found however that the diacetoxy-ester of BDNP is more effective in the protection of certain industrial and other aqueous media than the diol itself and any of the other esters which have been previously disclosed.

According to the present invention there is provided a method for the protection of an aqueous medium against attack by micro-organisms which comprises the addition to the medium of the compound 1,3-diacetoxy-2-bromo-2-nitro-propane (DABNP).

0036055

It is preferred that the aqueous medium comprises at least 80%, by weight, of water and is substantially homogeneous, i.e. that it is free from immiscible organic liquids and contains only a small amount of suspended matter, although it may contain dissolved materials such as inorganic salts. The method is of particular value in the preservation of enclosed aqueous systems such as cooling waters, paper mill liquors and swimming bath waters where the growth of micro-organisms, such as bacteria, fungi and algae, particularly bacteria and algae against which this anti-microbial is especially effective, in the medium can cause fouling of the distribution systems as well as objectionable odours and discolouration of the medium itself.

In cooling waters and paper mill liquors it is generally advantageous to use an anti-microbial which acts rapidly, killing off all the micro-organisms in a short period of time, and is subsequently over a longer period degraded into relatively innocuous species. This avoids the build up in the medium of significant concentrations of the anti-microbial which could affect higher forms of life and also reduces the possibility of the development of strains of the micro-organisms which are resistant to the anti-microbial.

The anti-microbial is preferably added to such media in shock doses, that is in successive doses each of which contains a sufficient amount to ensure a complete kill of all the micro-organisms in the media within a short period, the period between successive doses being adjusted to take account of the susceptibility of the media to microbial growth.

It has been found that DABNP has advantages over BNPD and the higher esters both in terms of its speed of kill and in its ability to protect aqueous media over a longer period, particularly against the growth of algae, which can infect swimming pool waters, especially in outdoor pools.

The actual quantity of the anti-microbial used depends upon the nature of the medium being treated and the type of treatment but is normally in the range 1 to 1000 parts per million (ppm), by weight.

DABNP may be prepared from BNPD by reaction with acetic acid under conditions favouring esterification, for example in the presence of a strong acid catalyst such as sulphuric acid or p-toluenesulphonic acid and with simultaneous distillation of the water formed during the reaction. Alternatively the acetic acid may be replaced by acetic anhydride or acetyl chloride under the appropriate conditions for these reagents.

The present invention is further illstrated by the following Examples in which the parts and percentages are by weight unless otherwise indicated.

Example 1

Preparation of DABNP via acetyl chloride

BNPD (100 parts) is added to acetyl chloride (94.2 parts) with constant stirring. The temperature is raised by 2 degrees to 27°C and reaction commences with evolution of hydrogen chloride gas. A gradual endotherm takes place during reaction lowering the temperature to 22°C. Reaction is complete after a three-hour period, i.e. evolution of gas ceases. In order to ensure complete reaction, the reaction mixture is heated to 40°C for one hour.   After cooling to room temperature, excess acetyl chloride is removed on a rotary evaporator, to yield a clear colourless liquid   (138 parts, i.e. 97.2%). I.R. analysis shows the   $C = O$ stretch at 1760cm$^{-1}$. NMR analysis shows a singlet at 2.0 ppm attributed to $CH_3$, and a singlet at 4.8 ppm attributed to $CH_2$.

Example 2

Comparison of the activity of DABNP and the dipropionyl ester of BNPD (DPBNP) against bacteria

100 ml volumes of solutions of DABNP and DPBNP each containing 100 parts per million (ppm) of biocide in distilled water are prepared and each is inoculated with 1 ml of an 18 hour broth culture of Pseudomonas aeruginosa.   A control which is free from biocide is also inoculated in the same fashion.   The test solutions and control are inspected 1, 2 and 4 hours after inoculation   and at each inspection a count of surviving bacterial cells is made.

The results are as follows:

| Solution | Surviving Cells | | |
|---|---|---|---|
| | 1 hour | 2 hours | 4 hours |
| DABNP | $2.1 \times 10^3$ | $<10$ | $<10$ |
| DPBNP | $7.4 \times 10^6$ | $7.7 \times 10^5$ | $5.5 \times 10^2$ |
| Control (no biocide) | $1.8 \times 10^6$ | $3.5 \times 10^7$ | $5.8 \times 10^6$ |

Example 3

Comparison of the activity of DABNP, DPBNP, BNPD, a mixture of 1,2-Benziothiazolone and lauryl-benzyl-dimethylammonium chloride (BIT/LDBAC) and a 3:1 mixture of 5-chloro-2-methyl-3-isothiazolone and 2-methyl-3-isothiazolone (CMI/MI) against bacteria in a paper mill liquor

100 ml volumes of two solutions of each of DABNP, DPBNP, BNPD, BIT/LDBAC and CMI/MI containing 200 and 500 ppm of biocide in a synthetic white water are prepared and each is inoculated with 1 ml of a 18 hour broth culture of Enterobacter cloacae. A control sample of the white water which is free from biocide is inoculated in identical fashion. The test solutions and control are inspected 1, 2 and 4 hours after inoculation and at each inspection a count of surviving bacterial cells is made.

The results are as follows:

| Solution | | Surviving Cells | |
| --- | --- | --- | --- |
| | 1 hour | 2 hours | 4 hours |
| DABNP 200 ppm | $8.7 \times 10^4$ | <10 | <10 |
| 500 ppm | <10 | <10 | <10 |
| DPBNP 200 ppm | $>3.0 \times 10^5$ | $1.9 \times 10^5$ | $3.6 \times 10^5$ |
| 500 ppm | $1.4 \times 10^3$ | $7.4 \times 10^2$ | <10 |
| BNPD 200 ppm | $>3.0 \times 10^5$ | $>3.0 \times 10^5$ | $>3.0 \times 10^5$ |
| 500 ppm | $>3.0 \times 10^5$ | $>3.0 \times 10^5$ | $2.5 \times 10^5$ |
| BIT/LBDAC 200 ppm | $>3.0 \times 10^5$ | $>3.0 \times 10^5$ | $3.2 \times 10^4$ |
| 500 ppm | $3.0 \times 10^3$ | <10 | $1.5 \times 10^4$ |
| CMI/MI 200 ppm | $>3.0 \times 10^5$ | $>3.0 \times 10^5$ | <10 |
| 500 ppm | $3.1 \times 10^3$ | $3.6 \times 10^4$ | <10 |
| Control (no biocide) | $1.8 \times 10^7$ | $>3.0 \times 10^7$ | $1.2 \times 10^8$ |

The results of the comparison demonstrate that DABNP is superior to BDNP and the dipropionyl derivative and also to the commercially available cooling water biocides BIT/LBDAC and CMI/MI particularly in respect of the rate of kill.

Example 4

Comparison of the activity of DABNP, DPBNP, BNPD and LBDAC against mixed freshwater algae

Equal quantities of a living suspension of three freshwater algae are added to a series of flasks and to these green suspensions are added one of the biocides at each of the following concentrations: 0.5, 1, 2, 5 and 10 ppm so that each flask contains one of the biocides at one of these concentrations. The flasks are held at a temperature of 18 °C and inspected for the presence or absence of green colour after 7 days and 14 days. The minimum lethal concentration (MLC) is that required to destroy the green colouration at the appropriate inspection. The results are as follows:

| Biocide | M.L.C. after (ppm) | |
|---------|--------|---------|
|         | 7 days | 14 days |
| DABNP   | 2      | 1       |
| DPBNP   | 5      | 5       |
| BNPD    | >10    | >10     |
| LBDAC   | 5      | 5       |

The results of this comparison indicate that DABNP is not only superior to BNPD and the dipropionyl derivative but also to the commercially available algicide LBDAC.

Example 5

Comparison of the activity of DABNP, the diglycollate of BNPD (DGBNP), the di-bromoacetate of BNPD (DBBNP), BNPD, BIT/LBDAC and CMI/MI against bacteria in industrial cooling water.

A sterile hard water containing 0.215 g/l of $CaCl_2 2H_2O$, 0.136 g/l of $MgCl_2 6H_2O$, 0.224 g/l of $NaHCO_3$ and 1 ml/l of ethylene glycol at a pH of 8.5 is innoculated with a culture of Pseudomonas aeruginosa and the biocides added to different portions to give concentrations of 50 ppm and 100 ppm. The samples are shaken at 30°C and inspected after 1, 2 and 4 hour intervals for surviving bacterial cells. The results are as follows:

| Anti-microbial | Concentration (ppm) | Count of live bacterial cells (cells/ml) | | |
|---|---|---|---|---|
| | | 1 hour | 2 hours | 4 hours |
| DABNP | 50 | $1.4 \times 10^6$ | $1.1 \times 10^3$ | 10 |
| | 100 | $4.2 \times 10^4$ | 10 | 10 |
| DGBNP | 50 | $1.8 \times 10^7$ | $2.7 \times 10^7$ | $2.0 \times 10^7$ |
| | 100 | $1.7 \times 10^7$ | $2.9 \times 10^7$ | $2.7 \times 10^7$ |
| DBBNP | 50 | $1.6 \times 10^7$ | $2.9 \times 10^7$ | $2.6 \times 10^7$ |
| | 100 | $2.1 \times 10^7$ | $3.0 \times 10^7$ | $1.8 \times 10^7$ |
| BNPD | .50 | $3.3 \times 10^7$ | $3.1 \times 10^7$ | $2.1 \times 10^7$ |
| | 100 | $1.9 \times 10^7$ | $2.4 \times 10^7$ | $1.8 \times 10^7$ |
| BIT/LBDAC | 50 | $1.3 \times 10^4$ | $9.1 \times 10^3$ | $8.4 \times 10^2$ |
| | 100 | $1.1 \times 10^6$ | $8.2 \times 10^3$ | $3.3 \times 10^3$ |
| CMI/MI | 50 | $7.5 \times 10^6$ | $1.7 \times 10^4$ | 10 |
| | 100 | $1.8 \times 10^7$ | $1.1 \times 10^2$ | 10 |
| Control (no biocide) | | $8.7 \times 10^7$ | $3.6 \times 10^7$ | $7.1 \times 10^7$ |

These results demonstrate that DABNP is considerably superior to the closely related esters of BNPD and to BNPD itself in the preservation of industrial cooling water. They also demonstrate that it is superior to BIT/LBDAC and of similar activity to CMI/MI both of which are sold commercially for this application.

Example 6

(a) Comparison of the activity of DABNP, DPBNP, BNPD and BIT in the preservation of water-based paints in the can.

Samples of a styrene/acrylic emulsion paint (Vinyl acryl latex), at a pH of 8.5, is dosed with each of the biocides at 50 ppm, 100 ppm and 200 ppm and stored at 30°C. The samples are innoculated at weekly intervals with a mixed suspension of the bacteria, Pseudomonas aeruginosa, Staphlococcus aureus, and Enterobacter cloacae. The surviving bacteria are determined on days 2 and 5 in each week. The results are as follows:

| Biocide | Concentration (ppm) | SURVIVING CELLS | | | | | |
|---|---|---|---|---|---|---|---|
| | | Week 1 | | Week 2 | | Week 3 | |
| | | Day 2 | Day 5 | Day 2 | Day 5 | Day 2 | Day 5 |
| DABNP | 200 | 10 | 10 | 10 | 10 | 10 | 10 |
| | 100 | 10 | 10 | 10 | 10 | 10 | 10 |
| | 50 | $4 \times 10^2$ | 10 | $3 \times 10^4$ | $2 \times 10^2$ | $6 \times 10^4$ | $7 \times 10^5$ |
| DPBNP | 200 | 10 | 10 | $5 \times 10^4$ | 10 | $5 \times 10^5$ | $1 \times 10^5$ |
| | 100 | 10 | 10 | $5 \times 10^3$ | 10 | $4 \times 10^4$ | 50 |
| | 50 | $7 \times 10^2$ | 10 | $6 \times 10^4$ | $2 \times 10^5$ | $7 \times 10^6$ | $5 \times 10^5$ |
| BNPD | 200 | $2 \times 10^4$ | 10 | $10^5$ | 50 | $2 \times 10^4$ | $2 \times 10^4$ |
| | 100 | $3 \times 10^4$ | 10 | $3 \times 10^5$ | $10^5$ | $4 \times 10^4$ | $3 \times 10^5$ |
| | 50 | $10^3$ | 10 | $5 \times 10^4$ | 40 | $4 \times 10^5$ | $2 \times 10^6$ |
| BIT | 200 | 10 | 10 | 10 | 10 | 30 | 10 |
| | 100 | 10 | 10 | 10 | 10 | 50 | 10 |
| | 50 | 10 | 10 | 10 | 10 | 10 | 10 |
| Control (no biocide) | | $3 \times 10^4$ | $4 \times 10^5$ | $3 \times 10^6$ | $3 \times 10^6$ | $5 \times 10^6$ | $1 \times 10^6$ |

Dx.3093 6055

(b) Comparison of the activity of DABNP, DGBNP and the
bis-dichloroacetate of BNPD (BDABNP) in the preservation
of water based paint in the can.

Separate samples of the paint used in Example 6(a), but
at a pH of 7, are dosed with these biocides at 50, 100
and 200 ppm and stored at 30°C. The paint is innoculated
with the same bacteria at weekly intervals and the minimum
level at which there are no bacterial survivors on the
third day of the third week is determined for each biocide.
The results are as follows:

| Biocide | Minimum level at which there are no surviving bacterial cells on day 3 of week 3 (ppm) |
|---------|------------------------------------------------|
| DABNP   | 50  |
| DGBNP   | 200 |
| BDABNP  | 200 |

The results of these comparisons demonstrate
that DABNP is superior to BNPD and other diesters thereof
in the in-can preservation of emulsion paints and is very
similar in effectiveness to BIT which is commercially used
for this application.

Example 7

Comparison of the activity of DABNP and the Di-acetoxy
ester of 2-chloro-2-nitro-1,3-propanediol (DACNP) against
bacteria.

Appropriate quantities of each biocide as a 1%
solution in dimethylformamide are added to 100 ml samples
of de-ionised water to give final biocide concentrations
of 50, 100 and 200 ppm. Each sample is innoculated with
1 ml of an 18-hour culture of the bacterium Pseudomonas
aeruginosa and incubated in a shaker at 30°C. Samples are removed from each test solution after incubation periods
of 2, 4 and 24 hours and the surviving bacteria assessed
by the decimal dilution technique, using nutrient agar
as the recovery medium.

The results are as follows:

| Biocide | Concentration (ppm) | Surviving cells (per ml) after | | |
|---|---|---|---|---|
| | | 2 hours | 4 hours | 24 hours |
| DABNP | 200 | $< 10$ | $<10$ | $<10$ |
| | 100 | $<10$ | $<10$ | $<10$ |
| | 50 | $<10$ | $<10$ | $<10$ |
| DACNP | 200 | $2 \times 10^5$ | $<10$ | $<10$ |
| | 100 | $2 \times 10^5$ | $2 \times 10^3$ | $<10$ |
| | 50 | $3 \times 10^5$ | $3 \times 10^4$ | $<10$ |
| Control (no biocide) | | $6 \times 10^6$ | $7 \times 10^6$ | $7 \times 10^6$ |

The results of this comparison indicate that DABNP
is more active than DACNP and has a faster rate of kill.

**0036055**

## CLAIMS

1.      A method for the protection of an aqueous medium against attack by micro-organisms which comprises the addition to that medium of the compound 1,3-diacetoxy-2-bromo-2-nitropropane (DABNP).

2.      A method according to claim 1 wherein the amount of DABNP added to the aqueous medium is in the range 1 to 1000 ppm.

3.      A method according to claim 1 or claim 2 wherein the aqueous medium comprises at least 80% by weight of water.

4.      A method according to any one of claims 1 to 3 wherein the aqueous medium is selected from the group comprising industrial cooling water, paper mill liquor and swimming bath water.

5.      A method according to any one of claims 1 to 4 wherein the micro-organisms are selected from the group comprising bacteria, fungi and algae.

6.      An aqueous medium containing dissolved therein from 1 to 1000 ppm of DABNP.

RGP/BH
9.12.80.